# EUROPEAN PATENT APPLICATION

(11) **EP 4 201 739 A1**
(43) Date of publication of application: **28.06.2023**
(21) Application number: 21216520.3
(22) Date of filing: 21.12.2021
(51) Int. Cl.: B60Q 1/00, F21S 41/125, F21S 43/13, G01S 17/00

(54) **AUTOMOTIVE LIGHTING DEVICE AND AUTOMOTIVE VEHICLE**

(71) Applicant: Valeo Vision, 93012 Bobigny Cedex (FR)
(72) Inventor: RENAUD, Pierre, 93012 BOBIGNY (FR); SANCHEZ, Vanesa, 93012 BOBIGNY (FR); ALBOU, Pierre, 93012 BOBIGNY (FR); PAUTY, Etienne, 93012 BOBIGNY (FR); BLUSSEAU, Eric, 93012 BOBIGNY (FR); SIKALI-MAMDEM, Yolande, 93012 BOBIGNY (FR)
(74) Representative: Valeo Visibility

(57) **Abstract**

The present invention refers to an automotive luminous device (1, 10, 11) comprising a solid-state light source (2) configured to emit light, an optical element (7, 8) configured to project the emitted light outside the luminous device, a luminous sensor (4) configured to acquire a portion of a reflection of the projected light and processing means (3) configured to control the operation of the light source and to receive data from the luminous sensor. The solid-state light source (2) comprises a native chip configured to emit light in a first wavelength and the luminous sensor has its maximum light sensitivity in a wavelength comprised between 0.95 and 1.05 times the first wavelength.

## Description

This invention is related to the field of automotive lighting devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also to help a potential driver to avoid obstacles on the road, in the case of low visibility conditions (due to weather conditions, deficient light surrounding the vehicle or going reverse, for example).

To achieve this goal, sensors play a crucial role, since they receive the information from the exterior of the vehicle, containing the data that will be interpreted in order to create a mapping of the surrounding objects.

There are many different sensors which are intended to accomplish this mission. Most of them use ultrasound, with acoustic pulses. Cameras are also adapted to acquire infrared or visible ambient light.

However, in some cases, light detection is hazardous, since light reflected is often mixed with other lights, and the properties of the light emitted by the light sources create problems when reflected by outer objects.

The present invention provides an alternative solution for the problem of by means of an automotive lighting device which comprises
- at least one solid-state light source configured to emit light, the solid-state light source comprising a native chip configured to emit light in a first peak wavelength;
- an optical element configured to project the emitted light outside the lighting device;
- a luminous sensor configured to acquire a portion of a reflection of the projected light, wherein the luminous sensor has its maximum light sensitivity in a wavelength comprised between 0.95 and 1.05 times the first peak wavelength; and
- processing means configured to control the operation of the light source and to receive data from the luminous sensor.

This luminous device uses the light emitted by the light sources which are in charge of the driving lighting functions to obtain information about the surrounding objects. There is therefore no need to use an additional light source, or ultrasound devices. The same device which may be used for lighting functions (such as Low Beam LB, a High Beam HB, a Daytime Running Light DRL, a Position Light PL, a Stop Light, a Reverse Light, a Corner Light CL, or a Turn Indicator TI) may also be used for objects detecting. In this case, there is no need to use a colour filter or a phosphor to modify the output colour of the light, since the luminous sensor is configured to operate in the same wavelength as the emission of the solid-state light source.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the light source is located at a distance lower than 2.5 cm from the processing means.

Since room is saved in the substrate, the processing means may be located close to the light source, so that the preparation of the special features (frequency, signal shape, etc) of the emitted light is done without being disturbed by the effects of other objects.

In some particular embodiments, the lighting device further comprises additional solid-state light sources.

The same substrate may have different light sources. Some of them will emit light that will be received by the luminous sensor, other ones will emit light that will be received by other sensors, and the rest will emit light that is not intended to be received by any sensor, since the lighting device has to perform lighting and/or signalling functions beyond the sensing abilities.

In some particular embodiments, the first wavelength is comprised between 610 and 680 nm.

Thus, light sources emitting in the red spectre may be used in this invention, with a luminous sensor which is configured to work in this wavelength range. Some lighting and signalling functions use this colour, so it is perfectly adaptable to this role.

In some particular embodiments, the first peak wavelength is comprised between 530 and 550 nm.

Thus, light sources emitting in the green spectre may be used in this invention, with a luminous sensor which is configured to work in this wavelength range. Although green colour is not used in usual lighting and signalling functions, it may be used in other devices installed in the vehicle.

In some particular embodiments, the first peak wavelength is comprised between 580 and 610 nm.

Thus, light sources emitting in the amber spectre may be used in this invention, with a luminous sensor which is configured to work in this wavelength range. Some lighting and signalling functions use this colour, so it is perfectly adaptable to this role.

In some particular embodiments, the first peak wavelength is comprised between 430 and 490 nm.

Thus, light sources emitting in the blue spectre may be used in this invention, with a luminous sensor which is configured to work in this wavelength range. Some lighting and signalling functions could use this colour, with or without a phosphor element, so it is perfectly adaptable to this role.

In some particular embodiments, the solid-state light sources comprise light emitting diodes or laser diodes.

These types of light sources are widely used in automotive vehicles for driving lighting. With the present invention, the same light sources may also be used for objects detection.

In a second inventive aspect, the invention provides an automotive vehicle comprising an automotive luminous device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
[Fig. 1] shows a general perspective view of some elements of an automotive lighting device according to the invention.
[Fig. 2] shows a general perspective view of some elements an automotive lighting device according to the invention.

In these figures, the following reference numbers are used for each of the following elements:
- 1: Rear lamp
- 2: LEDs
- 3: Processing unit
- 4: Photodiode
- 7: Light guide
- 8: Outer lens
- 10: Direction indicator lamp
- 11: Clearance lamp100 Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

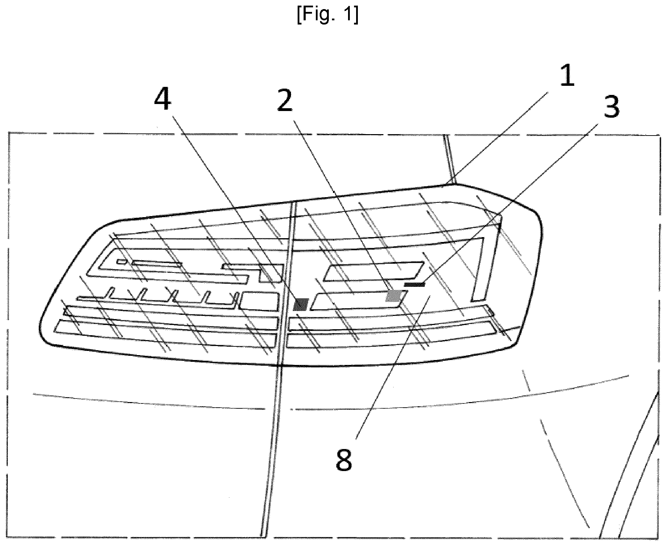

Figure 1 shows a general perspective view of an automotive lighting device according to the invention installed in an automotive vehicle 100.

This lighting device is a rear lamp 1 and comprises
- a LED 2, intended to contribute to the stop lamp function;
- an outer lens 8 configured to project the light emitted by the LED 2 outside the rear lamp 1
- a photodiode 4 intended to capture a reflected pattern; and
- a processing unit 3 configured to control the operation of the LED 2 and to receive data from the photodiode 4.

The processing unit 3 is configured to receive power from a power source and prepare the frequency and shape of the light to be emitted by the LED 2. This processing unit 3 is located very close to the LED 2, merely at 2 cm from it. Thus, the high frequency signal is duly transmitted to the LED 2.

The LEDs 2 comprise a native chip, which is configured to emit light with a peak wavelength of 660 nm. This red light is used to contribute to the performance of the stop lamp.

The photodiode is configured to work best in this range of wavelength, so that the maximum sensitivity is focused on red light. Hence, there is no need to use a phosphor on the LED to adapt the colour of the emitted light, and there is no need to use any colour filter in the photodiode for a better acquisition of the reflected light.

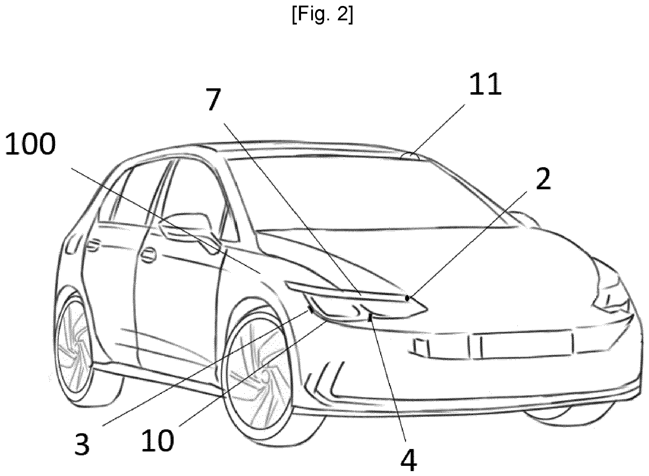

Figure 2 shows a general perspective view of an automotive lighting device according to the invention.

This vehicle 100 comprises two lighting devices according to the invention: a direction indicator lamp 10 and a clearance lamp 11

This direction indicator lamp 10 comprises
- a LED 2, intended to contribute to the direction indicator lamp function;
- a light guide 7 configured to project the light emitted by the LED 2 outside the lamp 10
- a photodiode 4 intended to capture a reflected pattern; and
- a processing unit 3 configured to control the operation of the LED 2 and to receive data from the photodiode 4.

The processing unit 3 is configured to receive power from a power source and prepare the frequency and shape of the light to be emitted by the LED 2. This processing unit 3 is located very close to the LED 2, merely at 2 cm from it. Thus, the high frequency signal is duly transmitted to the LED 2.

The LEDs 2 comprise a native chip, which is configured to emit light with a peak wavelength of 590 nm. This amber light is used to contribute to the performance of the direction indicator lamp.

The photodiode 4 is configured to work best in this range of wavelength, so that the maximum sensitivity is focused on amber light. Hence, there is no need to use a phosphor on the LED to adapt the colour of the emitted light, and there is no need to use any colour filter in the photodiode for a better acquisition of the reflected light.

The clearance lamp 11 is located on the top portion of the vehicle, and is also configured to project light and receive the reflected light. Due to its high position in the vehicle, surrounding objects may be more clearly detected. In this case, a green LED and a green photodiode are used to perform this function.

## Claims

1. - Automotive lighting device (1, 10, 11) comprising
- at least one solid-state light source (2) configured to emit light, the solid-state light source comprising a native chip configured to emit light in a first peak wavelength;
- an optical element (7, 8) configured to project the emitted light outside the lighting device; and
- a luminous sensor (4) configured to acquire a portion of a reflection of the projected light, wherein the luminous sensor has its maximum light sensitivity in a wavelength comprised between 0.95 and 1.05 times the first peak wavelength;
- processing means (3) configured to control the operation of the light source and to receive data from the luminous sensor.

2. - Automotive lighting device (1, 10, 11) according to any of the preceding claims, wherein the light source (2) is located at a distance lower than 2.5 cm from the processing means (3).

3. - Automotive lighting device (1, 10, 11) according to any of the preceding claims, further comprising additional solid-state light sources.

4. - Automotive lighting device (1, 10, 11) according to any of the preceding claims, wherein the first peak wavelength is comprised between 610 nm and 680 nm.

5. - Automotive lighting device (1, 10, 11) according to any of claims 1 to 3, wherein the first peak wavelength is comprised between 530 and 550 nm.

6. - Automotive lighting device (1, 10, 11) according to any of claims 1 to 3, wherein the first peak wavelength is comprised between 580 and 610 nm.

7. - Automotive lighting device (1, 10, 11) according to any of claims 1 to 3, wherein the first peak wavelength is comprised between 430 and 490 nm.

8. - Automotive lighting device (1, 10, 11) according to any of the preceding claims, wherein the solid-state light sources comprise light emitting diodes or laser diodes.

9. - Automotive vehicle (100) comprising an automotive lighting device (1, 10, 11) according to any of the preceding claims.
